# EUROPÄISCHE PATENTSCHRIFT

(11) **EP 1 290 370 B1**
(45) Veröffentlichungstag und Bekanntmachung des Hinweises auf die Patenterteilung: **22.03.2006**
(21) Anmeldenummer: 01940401.1
(22) Anmeldetag: 04.05.2001
(51) Int. Cl.: F16L 37/084

(54) **LÖSBARE SCHNELLKUPPLUNG MIT SICHERHEITSKLAMMER**
DETACHABLE QUICK CONNECTOR WITH SAFETY CLIP
RACCORD RAPIDE LIBERABLE A BRIDE DE SECURITE

(30) Priorität: 24.05.2000 DE 10025817
(43) Veröffentlichungstag der Anmeldung: 12.03.2003
(73) Patentinhaber: A. Raymond & Cie, 38019 Grenoble (FR)
(72) Erfinder: TREDE, Michael, F-68440 Habsheim (FR); HENLIN, Jean-Martin, F-68640 Waldighoffen (FR); MARTIN-COCHER, Daniel, F-38950 Saint Martin le Vinoux (FR)
(74) Vertreter: Rüttgers, Joachim
(86) Internationale Anmeldenummer: PCT/EP2001/005046
(87) Internationale Veröffentlichungsnummer: WO 2001/090629

(56) Entgegenhaltungen:
- EP-A- 0 484 690
- US-A- 4 781 400
- US-A- 5 897 142

## Beschreibung

Die Erfindung betrifft eine lösbare Schnellkupplung mit Sicherheitsklammer zum Verbinden von Flüssigkeitsleitungen, insbesondere von Kraftstoffleitungen im Kraftfahrzeugbau. Die Schnellkupplung besteht hierbei aus einem rohrförmigen Einsteckteil mit einer umlaufenden Halterippe, einem Kupplungsgehäuse mit einem zylindrischen Aufnahmeraum und einem separaten Halteelement mit radial in den Aufnahmeraum gerichteten, elastisch auffederbaren Haltekanten, welche die Halterippe nach dem Eindrücken des Einsteckteils hintergreifen, sowie aus einer vor der Einstecköffnung des Gehäuses positionierbaren Halteklammer mit einem zweiten Verrastungsmechanismus für den Fall, daß der Rastmechanismus des Halteelements versagt.

Eine derartige Schnellkupplung ist beispielsweise bekannt aus US 5.069.424. Die dort gezeigte Halteklammer (genannt "redundant clip") umgreift das rohrförmige Einsteckteil unmittelbar hinter der Halterippe mittels einer Schelle und besitzt am Ende von zwei nach außen um den Gehäuseeingang herumgeführten Bügeln zwei nach innen gebogene Finger, die in eine auf dem Gehäusekörper außen umlaufende Rille einrasten, wenn das Einsteckteil im Aufnahmeraum des Kupplungsgehäuses seine volle Verriegelungsposition erreicht hat, d.h. wenn die Rastfinger der eigentlichen Haltefeder nach dem Einführen des Einsteckteils die Halterippe hintergreifen. Sollte dieser vorrangig wirkende Rastmechanismus - aus welchem Grund auch immer - versagen, so wird das Einsteckteil immer noch von der Halteklammer gehalten, dessen Schelle dann gegen die Halterippe drückt. Diese Halteklammer bietet nicht nur einen zweiten Vemastungsschutz, sondern gleichzeitig auch eine visuelle Anzeige für die sichere Verrastung des Einsteckteils.

Bei dieser Schnellkupplung wird es jedoch als Nachteil empfunden, daß die Halteklammer aus Federstahl hergestellt sein muß, um die im Ernstfall auftretenden, hohen Haltekräfte aufnehmen zu können. Für den bestimmungsgemäßen Einsatz ist es ferner erforderlich, die Halteklammer zunächst auf dem Rohrstück vor der Halterippe aufzudrücken und zusammen mit dem Einsteckteil in den Aufnahmeraum einzuführen und dabei die beiden Rastfinger von Hand auseinanderzubiegen, damit diese über dem Kopf des Kupplungsgehäuses bis in die Rillen gelangen können. Damit gestaltet sich der Zusammenbau der beiden Kupplungsteile äußerst umständlich und erfordert viel handwerkliches Geschick des Monteurs.

Aufgabe der Erfindung ist es, eine Schnellkupplung mit Sicherheitsklammer so zu gestalten, daß die Halteklammer losgelöst vom Einsteckteil vor der Einstecköffnung positionierbar und fixierbar ist und die Verrastungsmittel nach erfolgter Verrastung des Einstecktells im Halteelement mit einfachen Mitteln in ihre Verrastungsposition gebracht werden können.

Diese Aufgabe wird bei einer Vorrichtung der eingangs genannten Art mit den kennzeichnenden Merkmalen des Patentanspruches gelöst.

Zur Realisierung dieses allgemeinen Erfindungsgedankens ist nach einem weiteren Merkmal der Erfindung ein In der Rahmenebene mittig angeordneter Stützring vorgesehen, dessen Innendurchmesser geringfügig größer ist als der Außendurchmesser des Einsteckteils und dessen Außendurchmesser gleich dem Außendurchmesser der Halterippe ist, und an dessen Außenrand die Rastfinger entgegen der Einführrichtung schräg nach außen auffederbar angeformt sind, und zwar derart, daß diese sich beim Einziehen des Stützrings in den Aufnahmeraum selbsttätig am Haltering abstutzen und gleichzeitig die nach innen abstehendem Anlagekanten hintergreifen. Hierdurch kann der Stützring beim Einfahren des Einsteckteils von der Halterippe gleichzeitig mit in den Aufnahmeraum gezogen werden, wodurch die Verrastungselemente automatisch in ihre Verrastungsposition gebracht werden. Außerdem läßt sich der mit diesen Merkmalen ausgestattete Clip vortellhafterweise aus hartelastischem Kunststoffmaterial herstellen.

Die Rastfinger sind nach einer bevorzugten Ausführungsform der Erfindung so ausgebildet, daß sie mit einem Ende am Außenrand des Stützrings biegsam angeformt sind, während diese mit ihren anderen Enden über etwa halbkrelsförmig angeformte Brückenstege mit zwei gegenüberliegenden Seitenwänden des Rahmens biegsam verbunden sind, wobei die Rastfinger jeweils mit einer nach innen und einer nach außen gerichteten Rastnase versehen sind, von denen die Innenliegende Rastnase die Halterippe nach dem Einführen des Einsteckteils hintergreifen und die außenliegende Rastnasen sich an entsprechend ausgebildeten Anlageflächen in der Gehäusewand abstützen. Auf diese Weise läßt sich erreichen, daß die Rastfinger durch die Federkraft der Brückenstege wieder nach außen gezogen werden, wenn sie nicht ordnungsgemäß einrasten. Außerdem bieten die zusammengedrückten Brückenstege eine visuelle Anzeige für die Funktionsbereitschaft der Halteklammer.

Bei Verwendung einer bekannten Schnellkupplung aus Kunststoff, bei der die gegenüberliegenden Haltekanten des Halteelements an Stützkörpern angeformt sind, die an ihren Enden über V-förmig zusammengeführte Federstege mit Druckplatten verbunden sind, welche durch entsprechende Öffnungen in der Gehäusewand nach außen ragen und zum Lösen der Kupplung von außen eindrückbar sind, ist es weiterhin von Vorteil, wenn die Raststege in ihrer Breite so bemessen sind, daß diese innerhalb des freien Raumes zwischen den Federstegen einführbar und verrastbar sind und wenn die außenliegenden Rastnasen sich unterhalb der Druckplatten an der in Einführrichtung vorderen Kante der Druckplattenöffnung abstützen können. Dies hat den Vorteil, daß die Halteklammer nachträglich bei fertigen Kupplungsgehäusen nachgerüstet, d.h. ohne weitere Umbaumaßnahmen eingebaut werden kann.

Weitere Merkmale der Erfindung und deren Vorteile ergeben sich aus den Unteransprüchen in Verbindung mit der Zeichnungsbeschreibung. In der Zeichnung sind zwei Ausführungsbeispiele der erfindungsgemäßen Kupplung dargestellt. Es zeigt
- Fig. 1: eine Halteklammer in Seitenansicht,
- Fig. 2: die gleiche Halteklammer in Vorderansicht,
- Fig. 3: ein Kupplungsgehäuse mit eingebautem Halteelement im Längsschnitt,
- Fig. 4: das gleiche Kupplungsgehäuse mit aufgesetzter Halteklammer,
- Fig. 5: die Halteklammer in perspektivischer Darstellung,
- Fig. 6: einen Querschnitt durch den Aufnahmeraum des Kupplungsgehäuses im Bereich des Halteelements,
- Fig. 7: eine Schnellkupplung mit aufgesetzter Halteklammer vor dem Einführen des Einsteckteils in Seitenansicht,
- Fig. 8: die gleiche Schnellkupplung mit teilweise eingeführtem Einsteckteil im Schnitt,
- Fig. 9: das gleiche Bild wie Figur 8 mit vollständig eingeführtem und doppelt verrastetem Einsteckteil.
- Fig. 10: eine andere Ausführungsform der Halteklammer in Seitenansicht,
- Fig. 11: die gleiche Halteklammer in Vorderansicht,
- Fig. 12: einen Schnitt durch die Halteklammer gemäß Linie XII - XII in Figur 11,
- Fig. 13: ein Kupplungsgehäuse mit aufgesetzter Halteklammer in Vorderansicht,
- Fig. 14: das gleiche Kupplungsgehäuse mit vormontierter Halteklammer in Seitenansicht vor dem Einführen des Einsteckteils,
- Fig. 15: das Kupplungsgehäuse im Schnitt beim Einführen des Einsteckteils,
- Fig. 16: das gleiche Bild beim weiteren Einführen des Einsteckteils,
- Fig. 17: das gleiche Bild bei vollständig eingeführtem Einsteckteil,
- Fig. 18: das gleiche Bild wie Figur 17, jedoch um 90° gedreht mit Schnitt durch die Haltekanten,
- Fig. 19: das Kupplungsgehäuse mit eingerastetem Einsteckteil beim Aufschieben der Halteklammer,
- Fig. 20: das gleiche Bild wie Figur 19 nach dem Aufschieben der Halteklammer und Einrasten der Rastfinger,
- Fig. 21: die erste Stufe beim Lösen des Einsteckteils und der Halteklammer vom Kupplungsgehäuse und
- Fig. 22: die zweite Stufe beim Lösen der Halteklammer vom Gehäuse zwecks Freigabe des Einsteckteils.

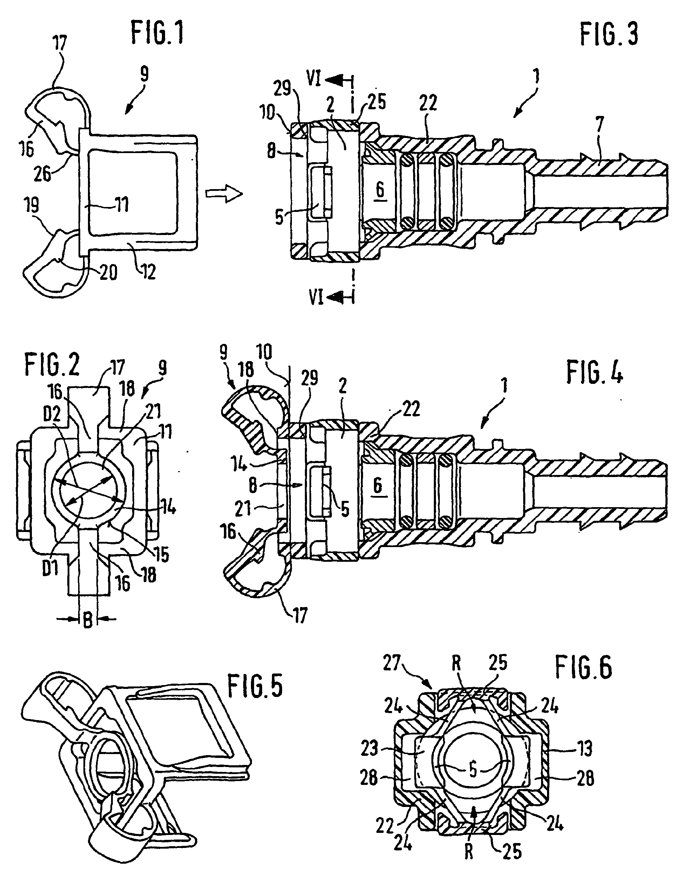

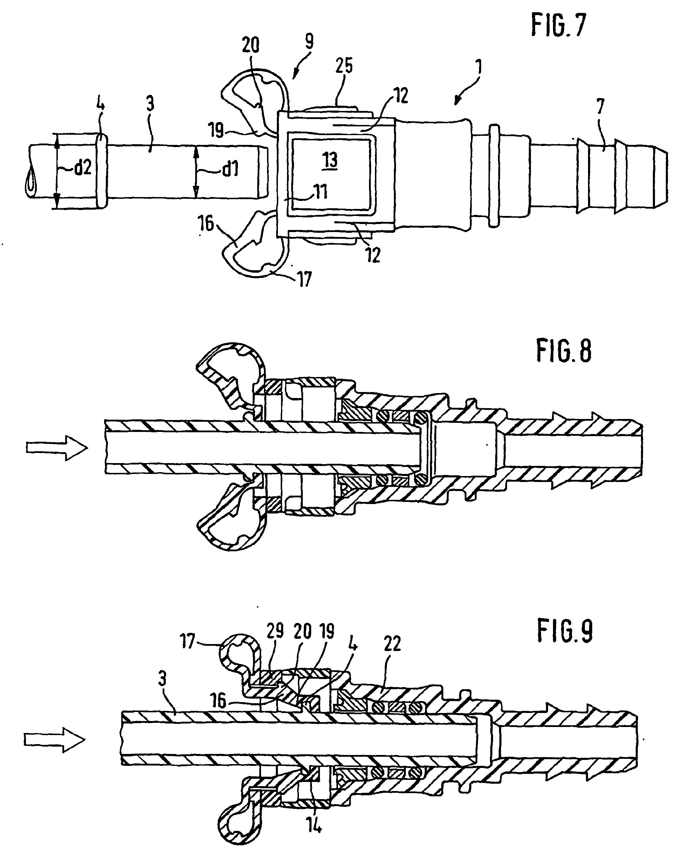

Die in den Figuren dargestellte, lösbare Schnellkupplung dient zum Verbinden von Flüssigkeitsleitungen, insbesondere von Kraftstoffleitungen im Kraftfahrzeugbau. Die Kupplung besteht hierbei aus dem in Figur 3 dargestellten Kupplungsgehäuse 1 mit einem zylindrischen Aufnahmeraum 6 zum Einführen des in Figur 7 dargestellten, rohrförmigen Einsteckteils 3, das mit einer umlaufenden Halterippe 4 versehen ist. Im vorderen Einsteckbereich des Kupplungsgehäuses 1 ist ein separates Halteelement 2 mit radial in den Aufnahmeraum 6 gerichteten, elastisch auffederbaren Haltekanten 5 eingebaut, welche die Halterippe 4 nach dem vollständigen Einführen des Einsteckteils 3 hintergreifen und dadurch für eine sichere Verbindung sorgen, während der vordere Bereich des Einsteckteils in bekannter Weise gegen die Gehäusewand 22 abgedichtet wird.

Das Kupplungsgehäuse 1 besitzt an seinem hinteren Ende einen Anschlußstutzen 7, welcher in bekannter Weise mit einer nicht dargestellten Flüssigkeitsleitung verbunden wird. Das Einsteckteil 3 kann hierbei sowohl das Ende eines stabilen Metallrohres sein, bei welchem die Halterippe 4 durch Stauchen eines Wulstes gebildet wird. Es kann aber auch - genau wie das Kupplungsgehäuse - aus starrem Kunststoff oder anderem gängigen Spritzgußmaterial gebildet sein, welches in bekannter Weise mittels eines ähnlichen Anschlußstutzens mit einer Schlauch- oder Rohrleitung verbindbar ist.

Vor der Einstecköffnung 8 des Gehäuses 1 ist, wie aus Figur 4 erkennbar, eine Halteklammer 9 angeordnet, welche mit einem zweiten Rastmechanismus für den Fall ausgestattet ist, daß der Hauptrastmechanismus des Halteelements 2 versagt oder unbeabsichtigt gelöst wird. Diese Halteklammer 9 besteht aus einem der Stirnseite 10 des Kupplungsgehäuses 1 angepaßten Rahmen 11, welcher an zwei gegenüberliegenden Seiten je einen elastisch auffederbaren Bügel 12 angeformt hat, die an entsprechenden Vorsprüngen 13 des Kupplungsgehäuses 1 verrastet werden (vgl. **Figur 7**).

Mittig zum Rahmen 11 befindet sich etwa in der Rahmenebene ein Stützring 14, dessen Innendurchmesser D1 geringfügig größer ist als der Außendurchmesser d1 des Einsteckteils 3, so daß dieses in das Durchgangsloch 21 bis zum Anschlag der Halterippe 4 eingeschoben werden kann. Der Außendurchmesser D2 des Stützrings 14 ist gleich dem Außendurchmesser d2 der Halterippe 4 oder etwas kleiner, so daß dieser Stützring 14 beim Einführen des Einsteckteils 3 zusammen mit der Halterippe 4 bis hinter die Haltekanten 5 des Halteelements 2 passieren kann.

Am Außenrand 15 des Stützrings 14 sind gegenüberliegend zwei schräg nach außen gerichtete Raststege 16 über Filmschamiere 26 biegsam angeformt. Diese Raststege 16 sind an ihren freien Enden über etwa halbkreisförmige Brückenstege 17 mit zwei gegenüberliegenden Seitenwänden 18 des Rahmens 11 ebenfalls biegsam verbunden. Die Raststege 16 sind jeweils mit einer nach innen und einer nach außen gerichteten Rastnase 19 und 20 versehen. Von diesen sind die innenliegenden Rastnasen 19 dazu bestimmt, die Halterippe 4 nach dem Einführen des Einsteckteils 3 und Einrasten der Haltekanten 5 zu hintergreifen. Gleichzeitig ist durch entsprechende Ausbildung des Aufnahmeraums 6 dafür gesorgt, daß die außenliegenden Rastnasen 20 sich an entsprechenden Anlagekanten abstützen können, so daß neben der Hauptverrastung im Halteelement 2 durch die Halteklammer 9 noch eine Zusatzvetrastung angeboten wird. Diese kommt jedoch erst zum Tragen, wenn die Hauptverrastung ausfällt.

In Figur 6 ist eine für den Einbau einer Halteklammer 9 bevorzugte Ausführungsform des Halteelements 2 im Querschnitt dargestellt. Bei diesem sind die gegenüberliegenden Haltekanten 5 an Stützkörpern 23 angeformt, die an ihren Enden über V-förmig zusammengeführte Federstege 24 mit Druckplatten 25 verbunden sind, welche durch entsprechende Öffnungen 27 in der Gehäusewand 22 nach außen ragen und zum Lösen der Kupplung von außen eingedrückt werden. Die Stützkörper 23 sind in Nischen 28 in der Gehäusewand 22 eingebettet und können beim Zusammendrücken der Druckplatten 25 seitlich auseinanderfedern, so daß die Haltekanten 5 außer Eingriff kommen und das Einsteckteil 3 von dem Kupplungsgehäuse 1 gelöst werden kann.

Die Raststege 16 sind von der Breite "B" her so bemessen, daß diese bequem innerhalb des freien Raumes R zwischen den Federstegen 24 eingeführt werden können. Dadurch läßt sich diese Halteklammer 9 ohne weitere baulichen Änderungen bei Kupplungen mit derartigen Halteelementen 2 nachrüsten.

In den **Figuren 7 bis 9** ist die zusätzliche Verrastungsfunktion der Halteklammer 9 beim Eindringen des Einsteckteils 3 in den Aufnahmeraum 6 der Kupplung anschaulich dargestellt. Figur 7 zeigt die Schnellkupplung mit aufgesetzter Halteklammer 9 vor dem Einführen des Einsteckteils 3. Bei Figur 8 ist das Einsteckteil 3 so weit in den Aufnahmeraum 6 eingedrungen, daß die Halterippen 4 gerade den Stützring 14 erfassen. Dieser wird im weiteren Verlauf des Eindringens in den Aufnahmeraum 6 gleichzeitig mitgenommen und zieht dabei die Raststege 16 gegen die Federkraft der Brückenstege 17 in den Freiraum R zwischen den Federstegen 23 so weit hinein, bis die außenliegenden Rastnasen 20 an der in Einführrichtung vorderen Kante 29 der Öffnung 27 unterhalb der Druckplatten 25 einrasten (Figur 9). Gleichzeitig hintergreifen die innenliegenden Rastnasen 19 die Halterippe 4 auf der gleichen Seite wie die Haltekanten 5, so daß das Einsteckteil 3 in dieser Lage zweimal gesichert ist.

Die Druckplatten 25 sind in ihrer Stärke zweckmäßigerweise so bemessen, daß diese beim Zusammendrücken zwecks Öffnung der Kupplung gleichzeitig die Haltekanten 5 des Halteelements 2 und die Rastnasen aus ihrer Verrastung lösen.

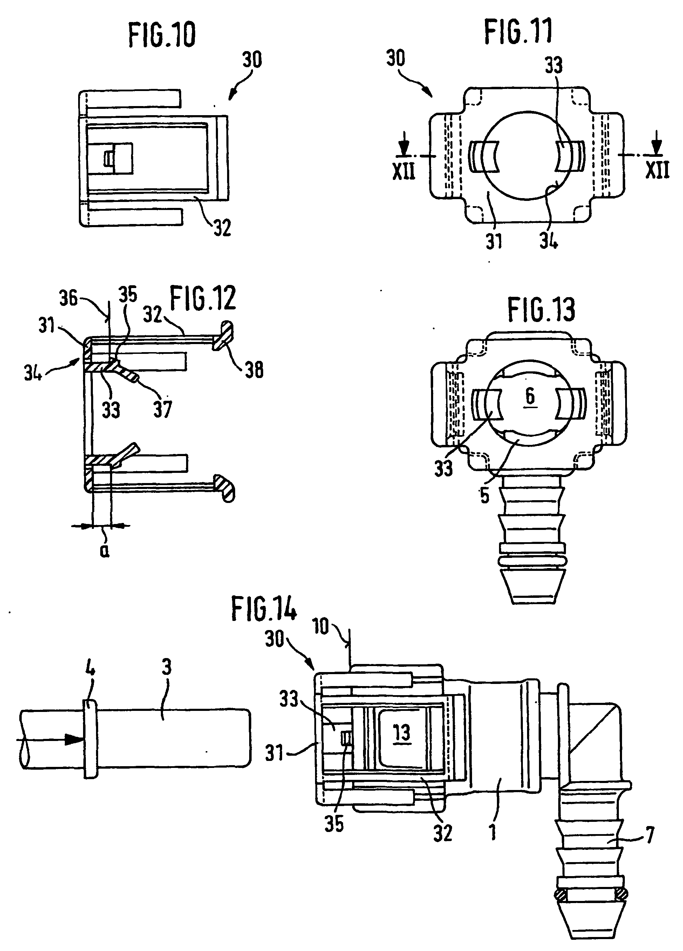

In den **Figuren 10 bis 12** ist eine andere Ausführungsform einer erfindungsgemäß einsetzbaren Halteklammer 30 gezeigt, die, wie aus Figur 13 ersichtlich, ebenfalls aus einem der Stirnseite 10 des Kupplungsgehäuses 1 angepaßten Rahmen 31 besteht, welcher mittels zweier elastisch auffederbarer Bügel 32 an entsprechenden äußeren Vorsprüngen 13 des Kupplungsgehäuses 1 verrastbar ist. Auch ist der Rahmen 31 mit in den Aufnahmeraum 6 einführbaren Rastfingem 33 verbunden, welche jedoch - im Unterschied zu der ersten Ausführungsform - vom Innenrand 34 des Rahmens 31 aus in entgegengesetzter Richtung, d.h. in Einführrichtung angeformt sind.

Die Rastfinger 33 besitzen, genau wie bei der ersten Ausführungsform, etwa in ihrer Mitte nach außen abstehende, mit ihrer Anlagekante 34 rückwärts gerichtete Rastnasen 35. Sie verlaufen vom Rahmen 31 bis zur Rastnase 35 achsparallel und sind danach schräg nach innen gerichtet, wobei sie mit den Fingerenden 37 am Haltering 4 des voll eingerasteten Einsteckteils 3 abstützbar sind.

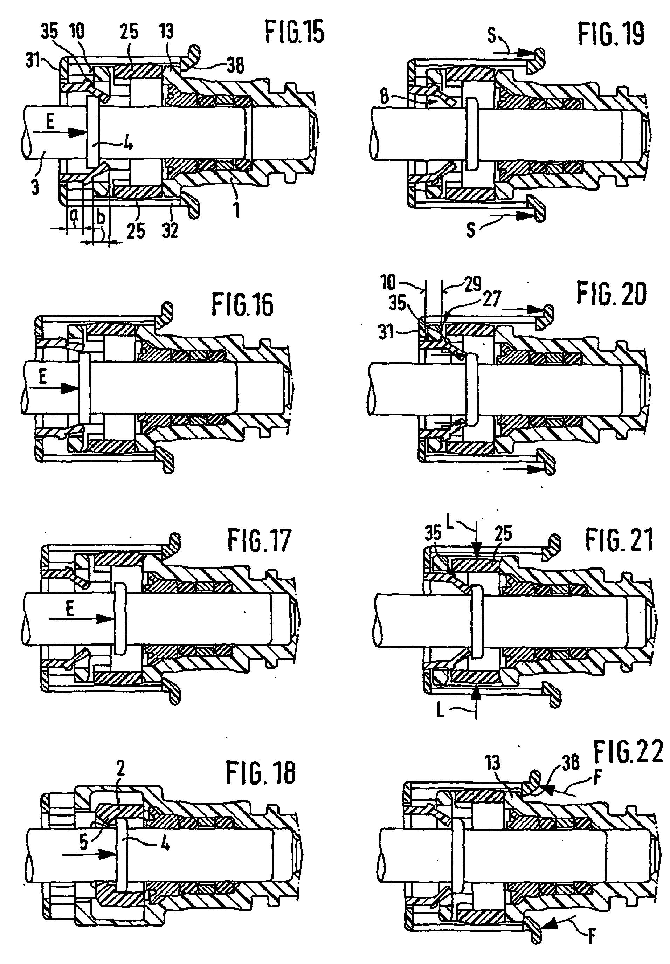

Der Abstand "a" zwischen der Anlagekante 36 der Rastnase 35 und der Innenseite des Rahmens 31 ist hierbei gleich dem Abstand "b" zwischen der Stirnseite 10 und der Anlagekante 29 (vgl. **Figur 15**).

In den **Figuren 15 bis 22** ist die Funktion und Wirkungsweise der Halteklammer 30 anschaulich dargestellt und soll nachfolgend beschrieben werden :

Figur 15 zeigt das Kupplungsgehäuse 1 im Schnitt mit aufgesteckter Halteklammer 30, wobei die Rasthaken 38 der Bügel 32 an den Vorsprüngen 13 des Gehäuses 1 eingerastet sind, während die Rastnasen 35 sich jedoch mit ihrer Rückseite vor der Stirnseite 10 befinden. Beim Einführen des Einsteckteils 3 in Pfeilrichtung "E" ( vgl. **Figur 16**) werden die schräg zur Mitte weisenden Fingerenden 37 von der Halterippe 4 nach außen gedrückt und federn wieder in ihre Ausgangslage zurück, wenn die Halterippe 4 den Engpass passiert hat. Das Einsteckteil 3 wird nun weiter in das Gehäuse 1 eingeführt, bis die Halterippe **4** hinter den Haltekanten 5 des Halteelements 2 eingerastet ist (vgl. **Figur 17** und die um 90° gedrehte Darstellung nach **Figur 18**).

Nun wird, wie aus **Figur 19** ersichtlich, die Halteklammer 30 in Pfeilrichtung "S" über das Gehäuse 1 geschoben, wobei die Rastnasen 35 in die Einstecköffnung 8 gezwungen werden und die Rastfinger 33 dabei nach innen ausweichen, bis die Rastnasen 35 den Engpass passiert haben und mit den Anlagekanten 36 die Innenkanten 29 der Druckplattenöffnung 27 hintergreifen. In diesem Moment liegt der Rahmen 31 mit seiner Innenseite an der Stirnseite 10 an und die Fingerenden 37 stützen sich gleichzeitig auf der Rückseite der Halterippe 4 ab, so daß das Einsteckteil 3 im Aufnahmeraum 6 zweimal gesichert ist (vgl. **Figur 20**).

Zum Lösen der Kupplung werden, wie aus Figur 21 ersichtlich, zunächst die Druckplatten 25 in Pfeilrichtung "L" zusammengedrückt. Dabei federn die Haltekanten 5 auseinander und die Rastnasen 35 werden so weit nach innen gedrückt, bis sie von der Anlagekante 29 freigehen. Sodann wird die Halteklammer 30 nach links bis zur Anlage der Rasthaken 38 an den Vorsprüngen 13 geschoben und die Federbügel 32 sodann in Pfeilrichtung "F" auseinandergebogen, bis deren Rasthaken 38 sich von den Vorsprüngen 13 lösen und das Einsteckteil 3 vollends herausgezogen werden kann ( vgl. **Figur 22**).

### Bezugszeichenliste

- 1: Kupplungsgehäuse
- 2: Halteelement
- 3: Einsteckteil
- 4: Halterippe
- 5: Haltekanten
- 6: Aufnahmeraum
- 7: Anschlußstutzen
- 8: Einstecköffnung
- 9: Halteklammer
- 10: Stirnseite
- 11: Rahmen
- 12: Bügel
- 13: Vorsprünge
- 14: Stützring
- 15: Außenrand
- 16: Raststege
- 17: Brückenstege
- 18: Seitenwände
- 19: Rastnase (innen)
- 20: Rastnase (außen)
- 21: Durchgangsloch
- 22: Gehäusewand
- 23: Stützkörper
- 24: Federstege
- 25: Druckplatten
- 26: Filmscharniere
- 27: Öffnungen
- 28: Nischen
- 29: Kante
- 30: Halteklammer
- 31: Rahmen
- 32: Bügel
- 33: Rastfinger
- 34: Innenwand des Rahmens
- 35: Rastnase
- 36: Anlagekante
- 37: Fingerende
- 38: Rasthaken

## Patentansprüche

1. Lösbare Schnellkupplung zum Verbinden von Flüssigkeitsleitungen, bestehend aus einem rohrförmigen Einsteckteil (3) mit einer umlaufenden Halterippe (4), einem Kupplungsgehäuse (1) mit einem zylindrischen Aufnahmeraum (6) und einem separaten Halteelement (2) mit radial in den Aufnahmeraum (6) gerichteten, elastisch auffederbaren Haltekanten (5), welche die Halterippe (4) nach dem Eindrücken des Einsteckteils (3) hintergreifen, sowie aus einer vor der Einstecköffnung (8) des Gehäuses (1) positionierbaren Halteklammer (9) mit einem zweiten Verrastungsmechanismus für den Fall, daß der Rastmechanismus des Halteelements (2) versagt, **dadurch gekennzeichnet, daß** die Halteklammer (9) aus einem der Stirnseite (10) des Kupplungsgehäuses (1) angepaßten Rahmen (11) besteht, welcher mittels zweier elastisch auffederbarer Bügel (12) an entsprechenden äußeren Vorsprüngen (13) des Kupplungsgehäuse (1) verrastbar ist, und welcher mit von der Einführseite des Einsteckteils (3) in den Aufnahmeraum (6) einführbaren, elastisch verformbaren Rastfingem (16) verbunden ist, von denen die vorderen Teile am Haltering (4) des voll eingerasteten Einsteckteils (3) abstützbar sind, während von den Rastfingern (16) nach radial außen abstehende, rückwärts gerichtete Rastnasen (20) gleichzeitig an der Gehäusewand (22) nach radial innen abstehende Anlagekanten (29) hintergreifen.

2. Lösbare Schnellkupplung nach Anspruch 1, **dadurch gekennzeichnet, daß** der Rahmen (11) einen in der Rahmenebene mittig angeordneten Stützring (14) aufweist, dessen Innendurchmesser (D1) geringfügig größer ist als der Außendurchmesser (d1) des Einsteckteils (3) und dessen Außendurchmesser (D2) gleich dem Außendurchmesser (d2) der Halterippe (4) ist, und an dessen Außenrand (15) die Rastfinger (16) entgegen der Einführrichtung schräg nach radial außen derart auffederbar angeformt sind, daß diese sich beim Einziehen des Stützrings (14) in den Aufnahmeraum (6) selbsttätig am Haltering (4) abstützen und gleichzeitig die nach radial innen abstehenden Anlagekanten (29) hintergreifen.

3. Lösbare Schnellkupplung nach Anspruch 2, **dadurch gekennzeichnet, daß** die Rastfinger (16) mit einem Ende am Außenrand (15) des Stützrings (14) biegsam angeformt sind, während diese mit ihren anderen Enden über etwa halbkreisförmig angeformte Brückenstege (17) mit zwei gegenüberliegenden Seitenwänden (18) des Rahmens (11) biegsam verbunden sind, wobei die Rastfinger (16) jeweils mit einer nach radial innen und einer nach radial außen gerichteten Rastnase (19) und (20) versehen sind, von denen die beiden radial innenliegenden Rastnasen (19) die Halterippe (4) nach dem Einführen des Einsteckteils (3) hintergreifen und die beiden radial außenliegenden Rastnasen (20) sich an den Anlagekanten (29) der Gehäusewand (22) abstützen.

4. Lösbare Schnellkupplung nach einem der Ansprüche 1 bis 3, bei der die gegenüberliegenden Haltekanten (5) des Halteelements (2) an Stützkörpern (23) angeformt sind, die an ihren Enden über V-förmig zusammengeführte Federstege (24) mit Druckplatten (25) verbunden sind, welche durch entsprechende Öffnungen (27) in der Gehäusewand (22) nach außen ragen und und zum Lösen der Kupplung von außen eindrückbar sind, wobei die Stützkörper (23) in seitlich in die Gehäusewand (22) eingelassene Nischen (28) eintauchen und beim Zusammendrücken der Druckplatten (25) in die Nischen (28) ausweichen können, **dadurch gekennzeichnet, daß** die Rastfinger (16) in ihrer Breite (B) so bemessen sind, daß diese innerhalb des freien Raumes (R) zwischen den Federstegen (24) einführbar und verrastbar sind.

5. Lösbare Schnellkupplung nach Anspruch 4, **dadurch gekennzeichnet, daß** die radial außenliegenden Rastnasen (20) sich an der in Einführrichtung vorderen Kante (29) der Öffnung (27) unterhalb der Druckplatten (25) abstützen.

6. Lösbare Schnellkupplung nach Anspruch 5, **dadurch gekennzeichnet, daß** die Druckplatten (25) in ihrer Stärke so bemessen sind, daß diese beim Zusammendrücken gleichzeitig die Haltekanten (5) des Halteelements (2) und die Rastnasen (20) aus ihrer Verrastung lösen.

7. Lösbare Schnellkupplung nach Anspruch 1, **dadurch gekennzeichnet, daß** die Rastfinger (33) vorn radialen Innenrand (34) des Rahmens (31) aus in Einführrichtung auffederbar angeformt sind, wobei die Rastfinger (33) bis zur Rastnase (35) achsparallel und danach schräg nach radial innen gerichtet sind und wobei der Abstand (a) zwischen der Anlagekante (36) der Rastnase (35) und radialen Innenseite des Rahmens (31) gleich dem Abstand (b) zwischen der Stirnseite (10) und der Anlagekante (29) ist.

## Claims

1. A releasable quick-action coupling for connecting fluid lines, comprising a tubular plug-in portion (3) with a peripherally extending holding rib (4), a coupling housing (1) with a cylindrical receiving space (6) and a separate holding element (2) with elastically expandable holding edges (5) which are directed into the receiving space (6) and which engage behind the holding rib (4) after the plug-in portion (3) is pushed in, and a holding clip (9) which can be positioned in front of the insertion opening (8) of the housing (1) and with a second latching mechanism in case the latching mechanism of the holding element (2) fails, **characterised in that** the holding clip (9) comprises a frame (11) which is adapted to the end (10) of the coupling housing (1) and which is latchable by means of two elastically expandable loops (12) to corresponding outer projections (13) of the coupling housing (1) and which is connected to elastically deformable latching fingers (16) which can be introduced into the receiving space (6) from the insertion side of the plug-in portion (3) and of which the front parts can be supported on the holding ring (4) of the fully engaged plug-in portion (3) while rearwardly directed latching noses (20) which project radially outwardly from the latching fingers (16) simultaneously engage behind contact edges (29) projecting radially inwardly at the housing wall (22).

2. A releasable quick-action coupling according to claim 1 **characterised in that** the frame (11) has a support ring (14) which is arranged centrally in the plane of the frame and the inside diameter (D1) of which is slightly larger than the outside diameter (d1) of the plug-in portion (3) and the outside diameter (D2) of which is equal to the outside diameter (d2) of the holding ring (4), and at the outside edge (15) of which the latching fingers (16) are formed resiliently expandably inclinedly outwardly in opposition to the direction of insertion in such a way that they are automatically supported on the holding ring (4) when the support ring (14) is pulled into the receiving space (6) and at the same time engage behind the radially inwardly projecting contact edges (29).

3. A releasable quick-action coupling according to claim 2 **characterised in that** the latching fingers (16) are flexibly formed with one end on the outside edge (15) of the support ring (14) while with their other ends they are flexibly connected by way of bridge limbs (17) of an approximately semicircular configuration to two oppositely disposed side walls (18) of the frame (11), wherein the latching fingers (16) are each provided with a radially inwardly and a radially outwardly directed latching nose (19) and (20) of which the two radially inwardly disposed latching noses (19) engage behind the holding rib (4) after insertion of the plug-in portion (3) and the two radially outwardly disposed latching noses (20) are supported at the contact edges (29) of the housing wall (22).

4. A releasable quick-action coupling according to one of claims 1 to 3 wherein the oppositely disposed holding edges (5) of the holding element (2) are formed on support bodies (23) which at their ends are connected by way of spring limbs (24) that are brought together in a V-shape to pressure plates (25) which project outwardly through corresponding openings (27) in the housing wall (22) and which can be pressed in from the outside to release the coupling, wherein the support bodies (23) engage into recesses (28) let laterally into the housing wall (22) and can deflect into the recesses (28) when the pressure plates (25) are pressed together, **characterised in that** the latching fingers (16) are of such a width (B) that they can be introduced within and latched in the free space (R) between the spring limbs (24).

5. A releasable quick-action coupling according to claim 4 **characterised in that** the radially outwardly disposed latching noses (20) are supported against the edge (29), which is the front edge in the insertion direction, of the opening (27) beneath the pressure plates (25).

6. A releasable quick-action coupling according to claim 5 **characterised in that** the pressure plates (25) are of such a thickness that when they are pressed together they simultaneously release the holding edges (5) of the holding element (2) and the latching noses (20) from their latching engagement.

7. A releasable quick-action coupling according to claim 1 **characterised in that** the latching fingers (33) are formed resiliently expandably from the radial inside edge (34) of the frame (31) in the insertion direction, wherein the latching fingers (33) are directed in axis-parallel relationship as far as the latching nose (35) and are thereafter directed inclinedly radially inwardly and wherein the spacing (a) between the contact edge (36) of the latching nose (35) and the radial inward side of the frame (31) is equal to the spacing (b) between the end (10) and the contact edge (29).

## Revendications

1. Raccord rapide débrochable servant à raccorder des conduites véhiculant des fluides, se composant d'un élément tubulaire mâle (3) muni d'une nervure périphérique (4), d'un élément femelle (1) définissant un logement d'emmanchement cylindrique (6) et d'un organe de retenue (2) séparé, comportant des arêtes de retenue (5) capables de céder par déformation élastique, orientées de manière radiale dans le logement d'emmanchement (6), qui viennent cramponner par derrière la nervure de retenue (4) après l'emmanchement de la pièce tubulaire mâle (3), ainsi que d'une agrafe de retenue (9) destinée à être placée devant l'ouverture d'emmanchement (8) de l'élément femelle (1), avec un deuxième mécanisme d'accrochage par encastrement pour le cas où le mécanisme d'accrochage de l'organe de retenue (2) viendrait à ne pas fonctionner, **caractérisé en ce que** l'agrafe de retenue (9) se compose d'un cadre (11) adapté à la face antérieure (10) de l'élément d'accouplement femelle (1), qui est destiné à être inséré en prise d'accrochage, au moyen de deux étriers (12) capables de céder par déformation élastique, avec des saillies extérieures (13) ménagées en correspondance sur l'élément d'accouplement femelle (1) et qui est raccordé à des doigts d'accrochage capables de se déformer élastiquement (16), destinés à être introduits dans le logement d'emmanchement (6) depuis le côté emmanchement de l'élément mâle (3), dont les éléments antérieurs sont destinés à venir prendre appui sur la nervure périphérique (4) de l'élément mâle (3) complètement inséré en prise d'encastrement, tandis que des ergots d'accrochage (20) orientés vers l'arrière, faisant saillie dans le plan radial vers l'extérieur depuis les doigts d'accrochage (16) viennent simultanément cramponner par derrière des arêtes d'assise (29) faisant saille dans le plan radial vers l'intérieur, prévues sur la paroi (22) de l'élément femelle.

2. Raccord rapide débrochable selon la revendication 1, **caractérisé en ce que** le cadre (11) comporte une bague d'appui (14) disposée dans la partie centrale du cadre, dont le diamètre intérieur (D1) est très légèrement supérieur au diamètre extérieur (d1) de l'élément mâle (3) et dont le diamètre extérieur (D2) est égal au diamètre extérieur (d2) de la nervure de retenue (4) et **en ce que** les doigts d'accrochage (16) sont réalisés solidaires par moulage du bord extérieur (15) de celle-ci, suivant une disposition oblique orientée dans le sens contraire de celui de l'introduction, avec la possibilité de céder par déformation élastique dans le plan radial vers l'extérieur dans des conditions telles que ceux-ci, lors de l'insertion de la bague d'appui (14) dans le logement d'emmanchement (6) viennent se placer d'eux-mêmes en appui sur la nervure de retenue (4), en venant simultanément cramponner par derrière les arêtes d'assise (29) faisant saillie dans le plan radial vers l'intêrieur.

3. Raccord rapide selon la revendication 2, **caractérisé en ce que** les doigts d'accrochage (16) sont, au niveau d'une de leurs extrémités, réalisés solidaires par moulage, avec la possibilité de se replier, du bord extérieur (15) de la bague d'appui (14), tandis qu'au niveau de leurs extrémités ils sont raccordés, avec la possibilité de se replier, par l'intermédiaire de pontets (17), aux deux parois latérales (18) diamétralement opposées du cadre (11), les doigts d'accrochage (16) étant en l'occurrence munis d'un ergot d'accrochage (19) et (20) respectivement orientés dans le plan radial vers l'intérieur et dans le plan radial vers l'extérieur, les deux ergots d'accrochage orientés vers l'intérieur (19) venant cramponner par derrière la nervure de retenue (4) après l'emmanchement de l'élément mâle (3) et les deux ergots d'accrochage (20) orientés vers l'extérieur venant prendre appui contre les arêtes d'assise (29) de la paroi (22) du logement d'emmanchement.

4. Raccord rapide selon l'une des revendications 1 à 3, dans lequel les arêtes de retenue (5) se faisant respectivement face de l'organe de retenue (2) sont réalisées solidaires par moulage d'éléments d'appui (23) qui sont raccordés, au niveau de leurs extrémités, par l'intermédiaire de lamelles élastiques (24) rapprochées l'une de l'autre selon une disposition en V, à des plaquettes de compression (25), qui font saillie à l'extérieur au travers d'ouvertures (27) ménagées en correspondance dans la paroi (22) du logement d'emmanchement et qui sont destinées à être comprimées depuis l'extérieur pour désolidariser le raccord de son emprise d'accouplement, les éléments d'appui (23) s'insérant en l'occurrence dans des alvéoles (26) disposées latéralement dans la paroi (22) du logement d'emmanchement et pouvant s'écarter en s'insérant dans les alvéoles (28) lors de l'application d'un effort de serrage bilatéral sur les plaquettes de compression (25), **caractérisé en ce que** la largeur des doigts d'accrochage (16) est dimensionnée dans des conditions telles que ceux-ci peuvent, à l'intérieur de l'espace libre (R) être emmanchés et amenés en prise d'encastrement entre les lamelles élastiques (24)

5. Raccord rapide selon la revendication 4, **caractérisé en ce que** les ergots d'accrochage situés à l'extérieur dans le plan radial (20) viennent prendre appui contre le bord antérieur dans le sens de l'emmanchement (29) de l'ouverture (27) sous les plaquettes de compression (25).

6. Raccord rapide selon la revendication 5, **caractérisé en ce que** les plaquettes de compression (25) ont une épaisseur telle que, lors de l'application sur celles-ci de l'effort de compression bilatéral, elles dégagent en même temps de leur emprise d'encastrement réciproque les arêtes de retenue (5) de l'organe de retenue (2) et les ergots d'accrochage (20).

7. Raccord rapide selon la revendication 1, **caractérisé en ce que** les doigts d'accrochage (33) sont réalisés solidaires par moulage, avec la possibilité de céder par déformation élastique dans le sens de l'emmanchement, depuis le bord intérieur radial (34) du cadre (31), les doigts d'accrochage (33) étant en l'occurrence orientés parallèlement à l'axe jusqu'à l'ergot d'accrochage (35) et ensuite obliquement vers l'intérieur dans le plan radial et la distance (a) entre l'arête d'assise (36) de l'ergot d'accrochage (35) et la face intérieure dans le plan radial du cadre (31) étant égale à la distance (b) entre la face antérieure (10) et l'arête d'assise (29).
